# FASCICULE DE BREVET EUROPEEN

(11) **EP 1 127 339 B1**
(45) Date de publication et mention de la délivrance du brevet: **16.08.2006**
(21) Numéro de dépôt: 99960697.3
(22) Date de dépôt: 24.06.1999
(51) Int. Cl.: G07F 7/10

(54) **SYSTEMES D'ORGANISATION DE CARTE A PUCE EN VUE DE SON UTILISATION EN TANT QUE SERVEUR DANS UN RESEAU DU TYPE INTERNET**
ORGANISATIONSSYSTEM FÜR EINE CHIPKARTE UND IHRE VERWENDUNG ALS SERVER IN EINE NETZWERK WIE DAS INTERNET
METHOD FOR ORGANISING A CHIP CARD SO THAT IT CAN BE USED AS SERVER IN AN INTERNET-TYPE NETWORK

(30) Priorité: 10.07.1998 FR 9808950
(43) Date de publication de la demande: 29.08.2001
(73) Titulaire: GEMPLUS, 13881 Gémenos Cédex (FR)
(72) Inventeur: MACAIRE, Alain, F-13001 Marseille (FR)
(86) Numéro de dépôt international: PCT/FR1999/001517
(87) Numéro de publication internationale: WO 2000/003363

(56) Documents cités:
- WO-A-97/06627
- WO-A-97/45814
- WO-A-98/10382
- WO-A-98/20411

## Description

L'invention concerne les cartes à puce électronique et, plus particulièrement dans de telles cartes des systèmes d'organisation qui permettent de les configurer en vue de les utiliser en tant que serveurs du type de ceux mis en oeuvre dans le réseau connu sous le nom d'INTERNET.

Les cartes à puce électronique par exemple, telles que décrites dans le document WO A 94 10657, sont de plus en plus largement utilisées pour réaliser diverses fonctions en liaison avec des appareils tels que des ordinateurs à usage personnel, des combinés de téléphones mobiles, des terminaux bancaires, etc... A cet effet, elles sont cohfigurées en circuits électroniques et en logiciels pour communiquer avec l'appareil avec lequel elles sont connectées selon des protocoles de communication qui sont relativement simples et sont définis par la norme ISO 7816-3/4.

Ces protocoles de communication ne permettent pas d'accéder à la carte à puce électronique dans un réseau du type INTERNET en mettant en oeuvre la méthode d'adressage utilisée dans un tel réseau pour l'accès en local ou à distance à tous les types d'applications (textes, images, sons, voix, fichiers...).

L'organisation actuelle des cartes à puce électronique ainsi que les protocoles de communication qu'elles utilisent ne permettent donc pas de les utiliser comme serveurs du type de ceux mis en oeuvré dans le réseau INTERNET.

Un but de l'invention est donc de réaliser une carte à puce électronique qui puisse être utilisée comme serveur dans un réseau du type INTERNET au travers d'un terminal adapté pour accéder à ce réseau.

Pour atteindre ce but, l'invention propose des systèmes d'organisation de carte à puce électronique qui permettent à tout usager du réseau auquel elle est connectée de communiquer avec elle selon un langage commun et universel d'adressage.

Afin de simplifier la lecture de la description et des revendications, les acronymes définis ci-après seront utilisés comme substantifs :
- URL est l'acronyme de l'expression anglo-saxonne "Uniform Resource Locator" et définit un moyen pour localiser et nommer une ressource (fichier, texte, sons, images, application, programme, table de données et généralement appelés "objet") disponible sur un serveur, dans le domaine du réseau INTERNET. Il existe plusieurs schémas d'accès URL qui correspondent chacun à un protocole d'accès, par exemple "http://" et "ftp://" qui permettent un accès distant via un réseau ou "file://" qui permet d'accéder à un système de fichier local.
- WWW est l'acronyme de l'expression anglo-saxonne "World Wide Web" et définit le réseau mondial d'informations et de services du réseau INTERNET.
- WAP est l'acronyme de l'expression anglo-saxonne "Wireless Application Protocols" et définit un ensemble de protocoles du réseau de téléphonie sans fil permettant aux terminaux mobiles de se connecter et d'accéder aux informations et serveurs du réseau INTERNET.
- HTML est l'acronyme de l'expression anglo-saxonne "Hyper Text Markup Language" et définit le langage permettant la définition de la structure et de l'affichage du document ou fichier ainsi que les éléments de navigation au sein du réseau WWW,
- HTTP est l'acronyme de l'expression anglo-saxonne "Hyper Text Transfer Protocol" et définit le protocole de communication du réseau WWW permettant notamment la récupération des ressources disponibles sur le réseau WWW.
- WSP est l'acronyme de l'expression anglo-saxonne "Wireless Session Protocol" et définit une couche de protocole WAP équivalent au protocole HTTP.
- TLS est l'acronyme de l'expression anglo-saxonne "Transport Layer Security" et définit le protocole relatif à la détermination des paramètres et algoritmes de sécurité afin d'établir une session sécurisée entre un terminal client et un serveur.
- WTLS est l'acronyme de l'expression anglo-saxonne "Wireless Transport Layer Security" et définit le protocole TLS transposé à la téléphonie sans fil dans l'ensemble des protocoles WAP.
- TCP/IP est l'acronyme de l'expression anglo-saxonne "Transmission Control Protocol/Internet Protocol" et définit une couche de protocole du niveau communication utilisé dans le réseau INTERNET qui gère l'adressage et le routage des paquets de données dans le réseau.
- WTP est l'acronyme de l'expression anglo-saxonne "Wireless Transport Protocol" et définit une couche de protocole WAP équivalent au protocole TCP/IP sur le réseau INTERNET.
- WML est l'acronyme de l'expression anglo-saxonne "Wireless Markup language" et définit un langage HTML simplifié pour le protocole WAP.
- WAE est l'acronyme de l'expression anglo-saxonne "Wireless Application Environment" et définit l'environnement d'application du terminal client, c'est-à-dire le navigateur client, dans le protocole WAP pour accès aux services du réseau INTERNET.
- WTA est l'acronyme de l'expression anglo-saxonne "Wireless Telephony Application" et définit un environnement d'application du terminal client dans le protocole WAP pour les services de téléphonie.
- CGI est l'acronyme de l'expression anglo-saxonne "Common Gateway Interface" et définit une interface d'accès aux applications du WWW. Cette interface permet d'activer des applications sur les serveurs du WWW à partir d'une requête URL émise à partir d'un navigateur client. Cette interface supporte le passage de paramètres d'entrée aux applications.
- APDU, est l'acronyme de l'expression anglo-saxonne "Application Protocol Data Unit" et définit un format d'échange élémentaire de commandes entre une application sur un terminal et une application sur carte à puce. Il s'agit par exemple de la norme ISO 7816-4.
- SQL est l'acronyme de l'expression anglo-saxonne "Structured Query Language" et définit le langage utilisé dans l'interrogation des bases de données relationnelles.
- SCQL est l'acronyme de l'expression anglo-saxonne "Structured Card Query Language" et définit le langage de requête pour carte à puce de type base de données, conforme à la norme ISO 7816-7. SCQL est l'équivalent dans les cartes à puce du langage SQL utilisé dans l'interrogation des bases de données relationnelles.
- BNF est l'acronyme de l'expression anglo-saxonne "Backus-Naur Form" et définit un pseudo-code symbolique permettant la définition des règles syntaxiques d'un langage et d'une grammaire.
- GSM est l'acronyme de l'expression anglo-saxonne "Global System for Mobile" et désigne un système de téléphonie mobile.

L'invention concerne donc un système d'organisation de carte à puce électronique en vue de son utilisation en tant que serveur par l'intermédiaire d'un terminal auquel elle est connectée dans un réseau de transmission de données numériques tel que le réseau INTERNET, ladite carte à puce électronique comprenant un microprocesseur, et des mémoires contenant des programmes et des données pour mettre en oeuvre le système opératoire de la carte à puce électronique et pour gérer les entrées/sorties de la carte à puce électronique, caractérisé en ce qu'il comprend, en outre :
- des moyens pour traduire les commandes en provenance du terminal en commandes élémentaires de la carte à puce électronique,
- des moyens pour effectuer les opérations définies par les commandes élémentaires, et
- des moyens pour formater la réponse de la carte à puce électonique vers le terminal.

Les moyens pour traduire les commandes URL comprennent une table de correspondance enregistrée dans une des mémoires.

Dans une variante, les cartes à puce électronique comprend, en outre, des moyens pour mettre en oeuvre des protocoles de session (WSP) et de transmission (WTP).

D'autres caractéristiques et avantages de la présente invention apparaîtront à la lecture de la description suivante d'exemples particuliers de réalisation, ladite description étant faite en relation avec les dessins joints dans lesquels :
- la figure 1 est un schéma montrant, en termes de couches de protocoles, l'accès en local d'une carte à puce utilisée comme serveur dans un réseau du type INTERNET au travers d'un terminal local adapté pour accéder à ce réseau ;
- la figure 2 est un schéma montrant, en termes de couches de protocoles, l'accès à distance d'une carte à puce utilisée comme serveur dans un réseau du type INTERNET au travers d'un terminal local adapté pour accéder à ce réseau ;
- la figure 3 est un premier exemple d'organisation d'une carte à puce serveur selon l'invention dans lequel toutes les couches de protocoles sont réalisées dans la carte à puce serveur ;
- la figure 4 est un deuxième exemple d'organisation d'une carte à puce serveur selon l'invention dans lequel les couches de protocoles n'existent que dans le terminal auquel est connectée la carte à puce serveur, et
- la figure 5 est un troisième exemple d'organisation d'une carte à puce serveur selon l'invention dans lequel l'interpréteur d'URL est transféré sur le terminal auquel est connectée la carte à puce serveur.

Les définitions des acronymes données dans le préambule font partie de la desription.

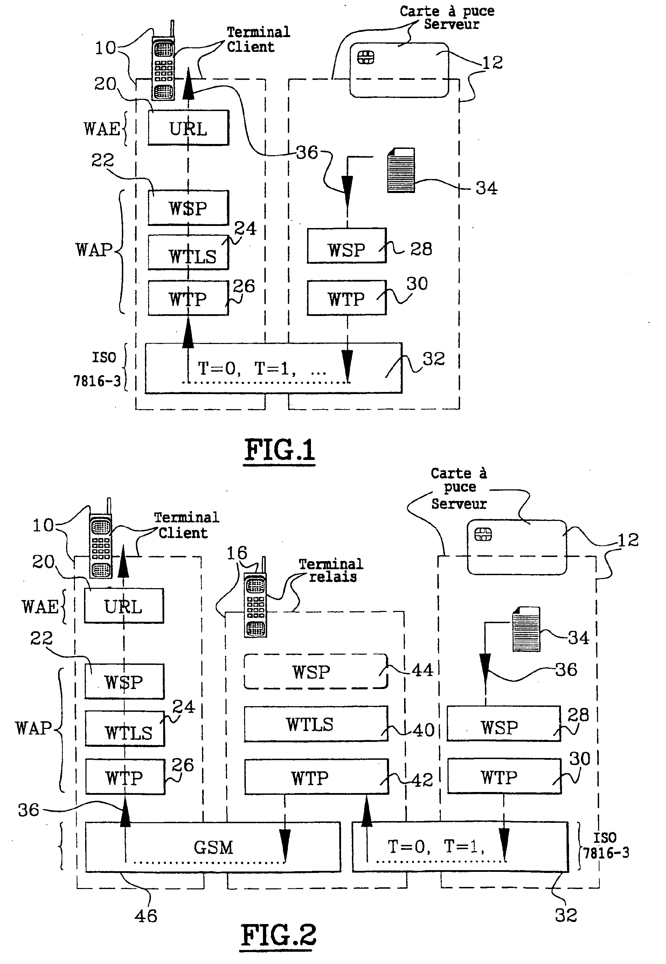

Les schémas des figures 1 à 5 seront décrits dans le cadre d'un réseau de téléphonie mobile du type GSM dans lequel un client ou usager du réseau dispose d'un combiné ou terminal 10 souhaitant accéder à une carte à puce serveur 12 situé en local du terminal 10 (figure 1) ou à distance (figure 2) par l'intermédiaire d'un terminal relais 16.

Pour accéder aux services du réseau INTERNET, le terminal client 10 fait appel à différents protocoles, disposés en couches superposées, au travers du mode d'adressage URL (20). Ces protocoles sont respectivement en général constitués d'une couche de session (22), d'une couche de sécurité (24) et d'une couche de transport (26). Ces couches définissent par exemple les protocoles de type WAP, respectivement WSP, WTLS et WTP.

La carte à puce serveur 12 comprend le protocole WSP (référence 26) et le protocole WTP (référence 30).

Dans le cas de la figure 1, le terminal client 10 et la carte à puce serveur 12 communiquent directement par les protocoles de communication 32 tels que l'ISO 7816-3 selon les modes T=0 et T=1. Cette organisation permet au terminal client 10 de récupérer un fichier 34 de la carte à puce serveur 12 selon le sens des flèches 36. Elle permet aussi de transférer un fichier ou autre du terminal 10 vers la carte à puce 12 en sens contraire des flèches 36, par exemple pour mettre à jour la carte à puce serveur 12.

Dans le schéma de la figure 2, la carte serveur 12 n'est pas connectée localement au terminal client 10 mais par l'intermédiaire d'un terminal relais 16 qui comprend au moins le protocole WTP (référence 42) et éventuellement le protocole WTLS (référence 40) dans le cas d'une liaison sécurisée il est à noter que le protocole WSP (référence 44) n'est pas nécessaire dans le terminal relais 16.

La carte à puce serveur 12 communique localement avec le terminal 16 par les protocoles de communication 32 tandis que ce dernier communique avec le terminal client 10 par l'intermédiaire de protocoles de transmission 46 du type utilisé pour la téléphonie mobile (GSM).

Cette organisation de la figure 2 permet au terminal client 10 de lire le fichier 34 de la carte à puce serveur par l'intermédiaire du terminal relais 16 via les protocoles de communication 32 et 46 dans le sens des flèches 36. Elle permet aussi de transférer un fichier ou autre du terminal 10 vers la carte à puce 12 en sens contraire des flèches 36, par exemple pour mettre à jour la carte à puce serveur 12.

La description des figures 1 et 2 montre que la carte à puce serveur 12 met en oeuvre les protocoles WSP et WTP qui peuvent être mis en oeuvre par le terminal relais.

La carte à puce 12 devra au moins réaliser les fonctions suivantes :
- traduire les commandes URL en séquence de commandes élémentaires pour la carte à puce,
- sélectionner le fichier demandé et le retourner au terminal client 10, ou bien lancer le traitement associé, et
- formater la réponse de la carte à puce vers le terminal client.

L'invention propose trois exemples de réalisation de la carte à puce serveur selon le degré d'intégration des protocoles WTP et WSP dans la puce 12.

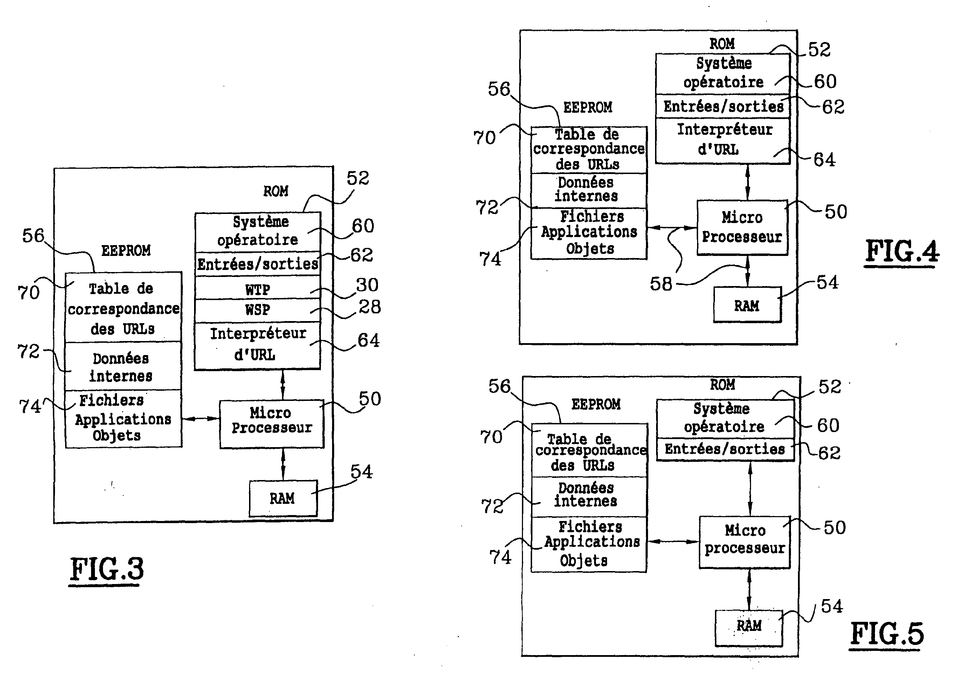

Soit l'exemple (a) (figure 3) dans lequel les protocoles WTP et WSP ainsi que l'interpréteur URL sont mis en oeuvre par la carte à puce.

Soit l'exemple (b) (figure 4) dans lequel seul l'interpréteur URL est mis en oeuvre dans la carte à puce, les protocoles WTP et WSP étant mis en oeuvre par le terminal auquel est associée la carte à puce.

Soit l'exemple (c) (figure 5) dans lequel tous les protocoles WTP et WSP ainsi que l'interpréteur URL sont mis en oeuvre par le terminal auquel est associée la carte à puce.

Quel que soit l'exemple particulier de réalisation de la carte à puce serveur selon l'invention, celle-ci comprendra :
- un microprocesseur 50,
- une mémoire 52, dite de programmés, du type non volatile à lecture uniquement, plus connu sous l'acronyme ROM pour l'expression anglo-saxonne "Read Only Memory", qui contient les programmes,
- une mémoire 54 du type volatile à accès aléatoire, plus connu sous l'acronyme RAM pour l'expression anglo-saxonne "Random Access Memory" et,
- une mémoire 56, dite de données, du type effaçable et programmable, plus connu sous l'acronyme EEPROM pour l'expression anglo-saxonne "Electrically Erasable Programmable Read Only Memory" qui contient les données.

Les flèches 58 indiquent que le microprocesseur 50 communique avec les mémoires 52, 54 et 56.

Les différences entre les trois exemples de réalisation concernent le contenu de la mémoire 52. En effet, dans l'exemple (a) (figure 3), la carte à puce contient :
- le système opératoire 60 de la carte à puce,
- le système de gestion des entrées/sorties 62,
- le protocole WTP (référence 30),
- le protocole WSP (référence 28), et
- l'interpréteur URL 64.

Dans cet exemple (a), la carte à puce 12 réalise toutes les fonctions WTP, WSP et interpréteur URL, ce qui implique une mémoire 52 de grande capacité.

Dans l'exemple (b) (figure 4), elle contient :
- le système opératoire 60 de la carte à puce,
- le système de gestion 62 des entrées/sorties, et
- l'interpréteur URL 64.

Dans cet exemple (b), les protocoles WTP et WSP sont installés sur le terminal relais 16 auquel est associée la carte à puce serveur.

Pour communiquer avec l'interpréteur URL 64 disposé sur la carte à puce 12, le terminal relais 16 est prévu pour élaborer des commandes dites "enveloppe" qui véhiculent l'URL du terminal relais vers la carte.

Dans l'exemple (c) (figure 5), elle contient :
- le système opératoire 60, et
- le système de gestion 62 des entrées/sorties.

Dans cet exemple (c), les protocoles WTP et WSP ainsi que l'interpréteur URL sont installés sur le terminal relais 16 auquel est associée la carte à puce serveur. A la mise en marche du terminal relais 16, ce dernier envoie, par exemple, une commande pour transférer le contenu de la table de correspondance des URLs.

Dans les trois exemples de réalisation, la mémoire 56 contient les mêmes éléments qui sont :
- la table de correspondance 70 des URLs,
- les données 72, internes à la carte à puce, et
- les fichiers, applications et objets (référence 74).

Le schéma générique d'accès URL est défini dans le document RFC 1738 de décembre 1994, accessible sur le réseau INTERNET, dont les auteurs sont T. BERNERS-LEE., L. MASINTER et M. Mc CAHILL selon le modèle suivant : <scheme> ://<user>:<password>@<host><port>/<url-path>

L'invention propose un schéma d'accès à la carte à puce serveur selon :
card://<accesscondition>@<host>:<cardreader>/url-parmlist

Dans ce schéma, le protocole d'accès à la carte à puce serveur en tant que ressource est identifié par "card://".

Les conditions d'accès à la carte, telles que le code personnel, le certificat cryptographique, sont par exemple définis par la partie "access condition".

Le terminal concerné auquel est connectée la carte à puce serveur est identifié par la partie "host".

Le lecteur de carte concerné est identifié par la partie "cardreader" et pourra correspondre à une adresse physique du lecteur ou à une adresse logique telle que le lecteur SIM des terminaux de téléphonie mobile.

Le chemin d'accès à la ressource est identifié par la partie "url-path" et pourra correspondre soit à un chemin logique à partir de la racine de la carte à puce, soit un chemin logique vers un fichier ou une application.

Dans le cas d'une commande du type application, la partie "parmlist" indiquera l'ensemble des paramètres à destination de cette application.

La synthèse complète du schéma d'adressage URL pour la carte à puce serveur "card://" est définie en utilisant la notation BNF et se présente comme ci-après :

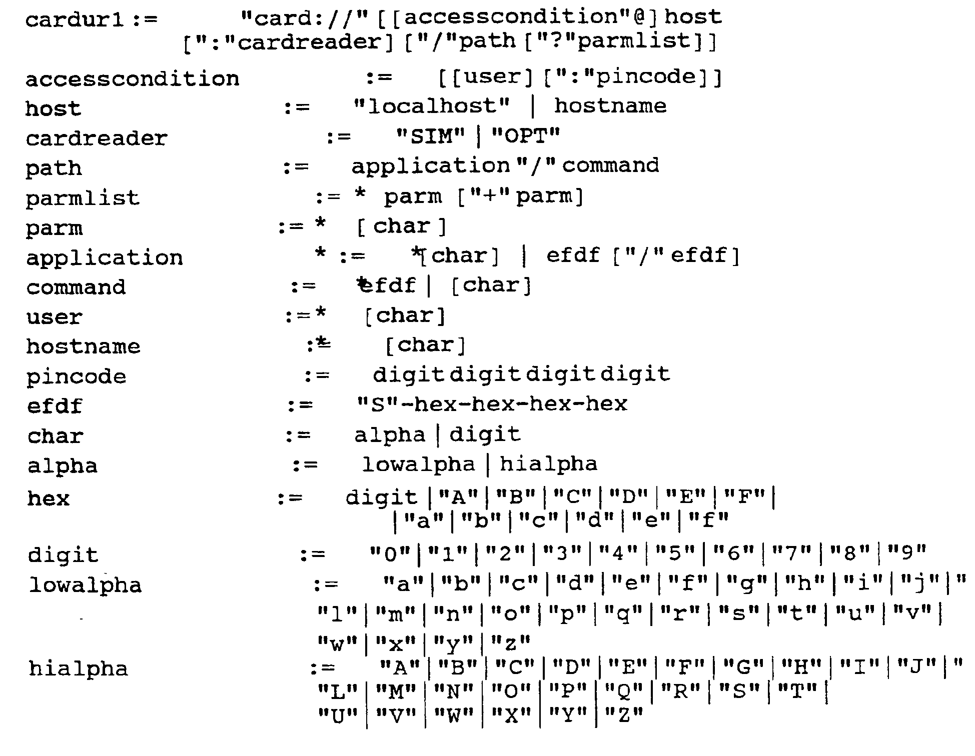

## Revendications

1. Carte à puce électronique connectée à un réseau de transmission de données numériques au travers d'un terminal adapté pour accéder à ce réseau, ladite carte à puce électronique comprenant au moins un microprocesseur (50), et des mémoires (52, 54, 56) contenant des programmes et des données pour mettre en oeuvre le système opératoire de la carte à puce électronique et pour gérer les entrées/sorties de la carte à puce électronique, **caractérisé en ce que** ladite carte comprend en outre :
• des moyens pour traduire (56, 70) des commandes en provenance du terminal (10, 16), selon un langage commun et universel d'adressage en commandes élémentaires de la carte à puce électronique,
• des moyens pour effectuer des opérations définies par les commandes élémentaires, et
• des moyens pour formater la réponse de la carte à puce électroniques vers le terminal selon ledit langage commun et universel d'adressage

2. Carte à puce électronique selon la revendication 1, **caractérisée en ce que** les moyens pour traduire les commandes comprennent une table de correspondance (70) des URLs qui est spécifique à chaque type de carte à puce.

3. Carte à puce électronique selon la revendication 2, **caractérisée en ce que** les moyens pour traduire les commandes comprennent, en outre, un programme interpréteur d'URL (64) enregistré dans une mémoire (52).

4. Carte à puce électronique selon la revendication 3, **caractérisée en ce qu'**elle comprend, en outre, des moyens (28,30) pour mettre en oeuvre des protocoles de session (WSP) et de transmission (WTP).

5. Carte à puce électronique selon la revendication 4, **caractérisée en ce que** les moyens pour mettre en oeuvre les protocoles WSP et WTP comprennent des programmes enregistrés dans une mémoire (52).

## Claims

1. Chip card connected to a digital data transmission network by means of a terminal adapted to access this network, said chip card comprising at least one microprocessor (50) and memories (52, 54, 56) containing programs and data for implementing the operating system of the chip card and for generating the inputs/outputs of the chip card, **characterised in that** said card also comprises:
. means for translating (56, 70) the commands coming from the terminal (10, 16) according to a common, universal addressing language into elementary commands of the chip card,
. means for performing the operations defined by the elementary commands, and
. means for formatting the response from the chip card to the terminal according to said common, universal language.

2. Chip card according to claim 1, **characterised in that** the means for translating the commands comprise a URL look-up table (70), which is specific to each type of chip card.

3. Chip card according to claim 2, **characterised in that** the means for translating the commands also comprise a URL interpreter program (64) stored in a memory (52).

4. Chip card according to claim 3, **characterised in that** it also comprises means (28, 30) for implementing session (WSP) and transport (WTP) protocols.

5. Chip card according to claim 4, **characterised in that** the means for implementing the WSP and WTP protocols comprise programs stored in a memory (52).

## Patentansprüche

1. An ein Übertragungsnetz digitaler Daten über ein zum Zugriff auf dieses Netz geeignetes Terminal angeschlossene Karte mit elektronischem Chip, wobei die genannte Karte mit elektronischem Chip wenigstens einen Mikroprozessor (50) umfasst, und Programme und Daten zur Umsetzung des Betriebssystems der Karte mit elektronischem Chip und zur Verwaltung der Eingänge /Ausgänge der Karte mit elektronischem Chip enthaltende Speicher (52, 54, 56), **dadurch gekennzeichnet, dass** die genannte Karte darüber hinaus Folgendes umfasst:
Mittel zum Übersetzen (56, 70) der aus dem Terminal (10, 16) stammenden Befehle gemäß einer gemeinsamen und universellen Adressierungssprache in elementare Befehle der Karte mit elektronischem Chip,
Mittel zur Durchführung der von den elementaren Befehlen definierten Operationen und
Mittel zur Formatierung der Antwort der Karte mit elektronischem Chip an das Terminal gemäß der gemeinsamen und universellen Adressierungssprache.

2. Karte mit elektronischem Chip gemäß Anspruch 1, **dadurch gekennzeichnet, dass** die Mittel zum Übersetzen der Befehle eine Entsprechungstabelle (70) der URLs umfassen, die für jeden Chipkartentyp spezifisch ist.

3. Karte mit elektronischem Chip gemäß Anspruch 2, **dadurch gekennzeichnet, dass** die Mittel zum Übersetzen der Befehle darüber hinaus ein in einem Speicher (52) registriertes URL-Interpretierprogramm (64) umfassen.

4. Karte mit elektronischem Chip gemäß Anspruch 3, **dadurch gekennzeichnet, dass** sie darüber hinaus Mittel (28, 30) zum Umsetzen der Sitzungs- (WSP) und Übertragungsprotokolle (WTP) umfasst.

5. Karte mit elektronischem Chip gemäß Anspruch 4, **dadurch gekennzeichnet, dass** die Mittel zum Umsetzen der Protokolle WSP und WTP in einem Speicher (52) registrierte Programme umfassen.
